# EUROPÄISCHE PATENTSCHRIFT

(11) **EP 0 906 642 B1**
(45) Veröffentlichungstag und Bekanntmachung des Hinweises auf die Patenterteilung: **21.11.2001**
(21) Anmeldenummer: 97928212.6
(22) Anmeldetag: 16.06.1997
(51) Int. Cl.: H01M 6/50, H01M 2/38, H01M 2/36

(54) **BATTERIE**
BATTERY
BATTERIE

(30) Priorität: 21.06.1996 DE 19624883
(43) Veröffentlichungstag der Anmeldung: 07.04.1999
(73) Patentinhaber: ZOXY Energy Systems AG, 09633 Halsbrücke (DE); EnBW Energie Baden-Württemberg AG, 76131 Karlsruhe (DE); Stadtwerke Karlsruhe GmbH, 76127 Karlsruhe (DE)
(72) Erfinder: Pauling, Hans Jürgen, 75038 Oberderdingen (DE)
(74) Vertreter: Heim, Hans-Karl, Dipl.-Ing.
(86) Internationale Anmeldenummer: EP9703126
(87) Internationale Veröffentlichungsnummer: WO9750137

(56) Entgegenhaltungen:
- EP-A- 0 116 960
- WO-A-84/03177
- WO-A-92/05598
- DE-C- 3 826 423
- GB-A- 369 447
- US-A- 4 439 501
- US-A- 4 448 859
- PATENT ABSTRACTS OF JAPAN vol. 018, no. 419 (E-1589), 5.August 1994 & JP 06 132040 A (NIPPONDENSO CO LTD), 13.Mai 1994,

## Beschreibung

Die Erfindung betrifft eine Batterie gemäß dem Oberbegriff des Anspruchs 1.

Batterien und Batterieanordnungen werden in zunehmendem Maße zur primären und zur sekundären Energieversorgung wichtig. Diese steigende Relevanz liegt nicht zuletzt in den immer stärker werdenden Anforderungen in bezug auf Umweltverträglichkeit der Energieversorgungssysteme im Sinne von Immissionsschutz und Wiederverwendbarkeit oder Wiederverwertbarkeit von Rohstoffen und von Energie.

Zum einen betrifft dies den Endverbraucher und somit die privaten Haushalte, zum anderen werden aber auch öffentliche Einrichtungen, und dort insbesondere der Bereich Infrastruktur und Verkehr, mit umweltverträglicheren Energiequellen ausgerüstet.

Bereits heute werden sowohl mobile Einrichtungen, wie z.B. Straßenfahrzeuge oder auch Schienen- oder Wasserfahrzeuge, mit umweltfreundlichen und wiederverwertbaren oder wiederaufladbaren Energieträgern in Form von Akkumulatoren oder Batterien ausgerüstet. Ferner finden derartige Energieträger in Form von Batteriesystemen auch in immobilen Einrichtungen, wie z.B. Stand-Allone-Geräten oder auch als Notstromquellen in Gebäuden immer größere Anwendung.

Generell besteht bei allen Energiequellen und Energieversorgungseinrichtungen das Problem, daß die Abgabe von Energie im normalen Betriebszustand zwar erwünscht ist, daß aber ferner bei Unfall, bei Gefahr oder Havarie oder auch im Fall von Wartungsarbeiten ein möglichst rasches und definiertes Abschalten der Energiequelle bzw. der Energiezufuhr erreicht werden muß.
Während z.B. bei Verbrennungsmotoren durch Abschalten der Zündung und durch Unterbrechen der Kraftstoffzufuhr der Verbrennungsmotor von einem Betriebszustand in einen Ruhezustand überführt wird, bei dem keinerlei Energie, außer eventueller Restwärme, abgegeben wird, besteht bei Batterien oder Batterieanordnungen die Schwierigkeit, daß auch nach Abtrennen oder Unterbrechen der zuführenden Leitungen die Batterie oder Batterieanordnung nach wie vor Energie erzeugt, d.h., daß an den Klemmen der Batterie oder der Batterieanordnung nach wie vor die Klemmenspannung, hier in Form der Leerlaufspannung der Batterie, anliegt.

Daraus folgt, daß z.B. bei einem Elektroauto im Falle eines Unfalls zwar durch einen auf Aufprall reagierenden Notabschalter sämtliche Leitungen zur Energieversorgung unterbrochen werden, daß aber z.B. durch Deformation des Fahrzeugs beim Aufprall ein elektrischer Kontakt zwischen den Batterieklemmen und leitenden Teilen des Fahrzeugs, insbesondere der Karrosserie, hergestellt sein kann, so daß sich für zu Hilfe eilende Personen bei der Bergung des Wracks oder der Insassen die Gefahr eines Elektrizitätsunfalls ergibt.
Ferner kann durch Deformation des Batterieraums selbst die Batterie zu einem Kurzschluß gebracht werden, so daß über die unter Umständen erheblichen fließenden Ströme unter Funkenbildung sich eine nicht zu unterschätzende Brandgefahr am Unfallort ergibt, was zu erheblichen Schadensvergrößerungen im Sach- oder Personenbereich führen kann.

Aus der DE 38 26 423 C1 ist eine Sicherheitsvorrichtung für eine elektrochemische Zelle, insbesondere für eine Lithium-Batterie, bekannt, bei welcher beim Betrieb ein Überhitzen und damit ein Bersten des Zellenbehälters durch rasches Ansprechen der Sicherheitsvorrichtung verhindert werden soll. Bei entsprechend kritischen Bedingungen, wie Druck oder Temperatur, im Inneren der elektrochemischen Zelle wird der Elektrolyt aus der elektrochemischen Zelle entfernt und in einem Auffangbehälter aufgefangen.

Der Erfindung liegt die **Aufgabe** zugrunde, eine Batterie zu schaffen, welche zur Wartung oder bei Gefahr einfach und sicher unter Vermeidung eines Batterie-Kurzschlusses aus einem Betriebszustand in einen ungefährlichen Ruhezustand überführt werden kann.

Die Aufgabe wird erfindungsgemäß durch eine gattungsgemäße Batterie mit den kennzeichnenden Merkmalen des Anspruchs 1 gelöst.

Vorteilhafte Weiterbildungen der erfindungsgemäßen Batterie sind jeweils Gegenstand der Unteransprüche.

Gemäß dem Patentanspruch 1 besteht die Lösung der Aufgabe darin, eine Batterie, welche mindestens zwei Elektroden in einem Elektrolytraum und wenigstens eine gesteuert betätigbare Schnell-Ablaßeinrichtung zum raschen Ablassen eines Elektrolyten aus dem Elektrolytraum aufweist, wobei nach dem Ablassen des Elektrolyten die Elektroden vom Elektrolyten im wesentlichen oder vollständig unbenetzt und voneinander galvanisch getrennt sind, mit einem Elektrolytraum zu versehen, welcher in einen Reaktionsraum und einen Reservoirraum gegliedert ist. Der Reaktionsraum, in welchem die Elektroden angeordnet werden, ist relativ zum Reservoirraum wesentlich kleiner ausgebildet, und der Reservoirraum ist unmittelbar unterhalb des Reaktionsraums angeordnet. Eine Verbindungsöffnung mit einer großen Querschnittsfläche zwischen dem Reaktionsraum und dem Reservoirraum dient zur direkten Kommunikation beider Räume.

Nach Ablassen des Elektrolyten und somit nach galvanischer Unterbrechung der Elektrodenverbindung sind sämtliche stromerzeugenden elektrochemischen Prozesse der Batterie unterbrochen, so daß selbst bei Deformation des Batterieraums und Kontaktierung der Batterieklemmen mit irgendwelchen leitfähigen Bereichen ein Stromunfall unmöglich ist, da die Batterie in diesem Ruhezustand keinerlei Elektrizität erzeugen kann.

Im einfachsten Fall ist es vorgesehen, daß der Elektrolyt aus dem Reaktionsraum in den Reservoirraum und aus diesem herausfließt. Aus Gründen der Umweltverträglichkeit und der Wiederverwendbarkeit des Elektrolyten ist es aber sinnvoll, daß mindestens ein Elektrolyt-Auffangbehälter zur Aufnahme zumindest eines Teils des Elektrolyten aus dem Elektrolytraum vorgesehen ist. Dann kann der Elektrolyt gefahrlos abgelassen werden, so daß er z.B. die Umwelt nicht kontaminiert, und er kann nach Beseitigung der Gefahr oder nach Beendigung der Wartungsarbeiten wieder in den Elektrolytraum zum Reaktivieren der Batterie eingefüllt werden.

Die erfindungsgemäße Batterieanordnung weist eine hohe Batteriekapazität auf, da der Elektrolytraum in den Reaktionsraum mit den Elektroden und den mit dem Reaktionstraum kommunizierenden Reservoirraum zur Aufnahme eines größeren Elektrolytreservoirs aufweist. Indem der Reaktionsraum gegenüber dem Reservoirraum kleinvolumig ausgebildet ist und dem klein gehaltenen Reaktionsraum ein sehr großes Elektrolytreservoir gegenübersteht, erhält die Batterieanordnung eine besonders große Kapazität, was insbesondere bei Elektrofahrzeugen zu einer größeren Fahrreichweite führt. Dabei sind ferner kompakte und/oder nicht poröse Elektroden vorteilhaft.

Die Kommunikation zwischen dem Reaktionsraum und dem Reservoirraum wird vorteilhafterweise durch eine Austauschleitung realisiert. Dabei wird in besonders einfacher Weise Konvektion ausgenutzt, die z.B. durch den Dichteunterschied zwischen verbrauchtem und unverbrauchtem Elektrolyten erzeugt wird. Um die Konvektion und damit den Elektrolytaustausch zwischen Reaktionsraum und Reservoirraum zu steigern, ist mindestens eine Pumpe oder eine Rühr-, Umwälz- oder Heizeinrichtung vorgesehen. Diese Einrichtung kann entweder in der Austauschleitung bzw. Verbindungsöffnung, im Reaktionsraum oder auch im Reservoirraum selbst ausgebildet sein.

Ein besonders einfaches Ablassen des Elektrolyten aus dem Elektrolytraum in den Elektrolyt-Auffangbehälter erreicht man, wenn man den Elektrolyt-Auffangbehälter im wesentlichen unterhalb des Elektrolytraums anordnet, weil dann die Schwerkraft den Elektrolyten spontan nach unten in den Elektrolyt-Auffangbehälter treibt. Dabei ist es von Vorteil, in der Schnell-Ablaßeinrichtung zum schnellen Ablassen des Elektrolyten eine elektrisch steuerbare Verschlußeinrichtung auszubilden. Diese unterbindet den Elektrolytfluß zwischen Elektrolytraum und dem Elektrolyt-Auffangbehälter, also insbesondere das Ablassen des Elektrolyten, in zumindest einer Richtung. Dadurch wird das Ausfließen des Elektrolyten im normalen Betriebszustand verhindert, und ferner wird gewährleistet, daß bei abgelassenem Elektrolyten ein Rückfluß des Elektrolyten aus dem Elektrolyt-Auffangbehälter in den Elektrolytraum hinein und damit eine Reaktivierung der Batterie nicht stattfindet.

Diese Verschlußeinrichtung wird vorteilhafterweise als stromlos offenes Ventil ausgebildet. Im normalen Betriebszustand der Batterie wird dieses stromlos offene Ventil mit einem Strom beaufschlagt und damit geschlossen gehalten. In einer Gefahrensituation wird steuerbar der Stromfluß unterbrochen, damit das Ventil geöffnet und der Elektrolyt aus dem Elektrolytraum in den Elektrolyt-Auffangbehälter hinein abgelassen und damit die Batterie deaktiviert.
Besonders einfache Einmal-Verschlußeinrichtungen ergeben sich, wenn man die Verschlußeinrichtung der Schnell-Ablaßleitung als Sprengbolzen oder als Sollbruchstelle oder dergleichen ausbildet.

Eine weitere vorteilhafte Ausbildung der erfindungsgemäßen Batterie erhält man durch Vorsehen einer Leitung zum Fördern von Elektrolyten zwischen dem Elektrolyt-Auffangbehälter und dem Elektrolytraum in zumindest einer Richtung. Dann nämlich kann z.B. nach Beendigung der Gefahrensituation oder der Wartungsarbeiten der abgelassene Elektrolyt aus dem Elektrolyt-Auffangbehälter zurück in den Elektrolytraum zur Reaktivierung der Batterie befördert werden.

Eine weitere vorteilhafte Ausgestaltung ergibt sich durch Ausbilden mindestens einer gesteuert betätigbaren Fördereinrichtung zum Fördern von Elektrolyten zwischen dem Elektrolyt-Auffangbehälter und dem Elektrolytraum. Dann nämlich kann zum einen das Ablassen des Elektrolyten aus dem Elektrolytraum heraus beschleunigt und unterstützt werden, insbesondere wenn der Elektrolyt-Auffangbehälter oberhalb des Elektrolytraums ausgebildet ist oder wenn, infolge einer Gefahrensituation, die Batterieanordnung durch den Unfallablauf (Umkippen eines Fahrzeugs) auf dem Kopf steht. Ferner kann eine derartige gesteuert betätigbare Fördereinrichtung auch zum Rückfördern des abgelassenen Elektrolyten aus dem Elektrolyt-Auffangbehälter in den Elektrolytraum hinein verwendet werden.

Als derartige Fördereinrichtung bietet sich z.B. eine Pumpe, die insbesondere elektrisch betrieben wird, an. Ferner kann die Fördereinrichtung aber vorteilhafterweise als Einrichtung zum Verdrängen des Elektrolyten aus dem Elektrolytraum heraus ausgestaltet sein. Wird diese Einrichtung zum Verdrängen als Gasdruckpatrone ausgebildet, so ergibt sich ein besonders rasches Austreiben des Elektrolyten aus dem Elektrolytraum und damit eine weitere Verringerung der Unfallgefahr durch Stromschlag.

Eine weitere Vereinfachung erhält man mit der Ausbildung der Schnell-Ablaßeinrichtung als Notablaßöffnung oder als Steig- oder U-Rohr mit Verschlußteilen, wobei hierbei wieder das Schwergewicht auf dem schnellen Ablassen des Elektrolyten aus dem Elektrolytraum liegt.

Bei all diesen erfindungsgemäßen Batterien oder Batterieanordnungen ist es insbesondere vorteilhaft, eine Steuereinrichtung zum Steuern der Fördereinrichtungen und/oder Ventileinrichtungen über Steuerleitungen vorzusehen. Dann nämlich ist eine definierte Abschaltung im Gefahrenfall oder im Wartungsfall möglich.

Eine besonders einfach zu handhabende Batterie oder Batterieanordnung ergibt sich, wenn die Steuereinrichtung zum Erkennen eines Signals einer Gefahrensituation und/oder zum Erkennen einer Benutzeraktivierung ausgebildet ist, so daß bei erkanntem Signal das Ablassen des Elektrolyten oder das Deaktivieren des Elektrolyten auslösbar ist. Dazu kann die Steuereinrichtung vorteilhafterweise mindestens eine Sensoreinrichtung aufweisen, die als Beschleunigungssensor oder als manuell betätigbarer Notabschalter ausgelegt ist.

Die Erfindung wird nachfolgend anhand einer Zeichnung näher erläutert.

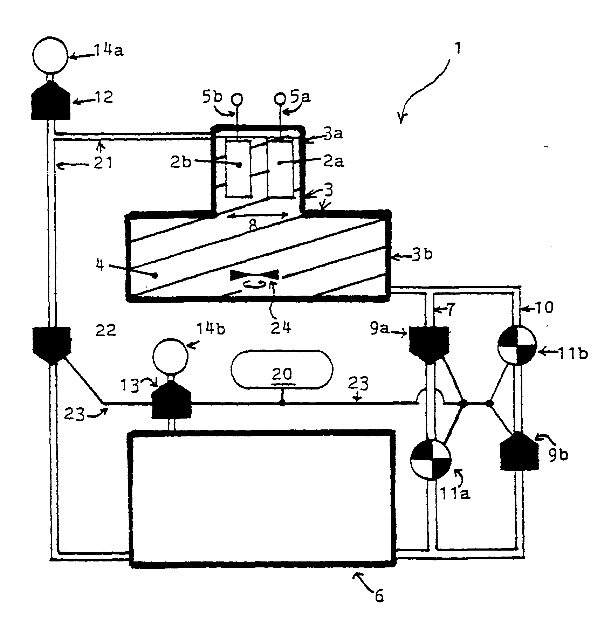

In einer einzigen Figur ist eine erfindungsgemäße Batterie 1 im normalen Betriebszustand in einer stark schematisierten Weise dargestellt.

In einem Elektrolytraum 3 sind zwei Elektroden 2a und 2b angeordnet, welche über Leitungen 5a und 5b elektrisch abgegriffen werden.

Der Elektrolytraum 3 ist in einen Reaktionsraum 3a und in einen Reservoirraum 3b geteilt. Der Reaktionsraum 3a ist gegenüber dem Reservoirraum 3b kleinvolumig gehalten und enthält die Elektroden 2a, 2b vollständig. Die Zeichnung verdeutlicht, daß der Reservoirraum 36 unmittelbar unterhalb des Reaktionsraums 3a angeordnet ist.

Eine direkte Kommunikation bzw. ein Austausch zwischen dem Reaktionsraum 3a und dem Reservoirraum 3b des Elektrolytraums 3 erfolgt über eine Austauschleitung 8, welche in dem gezeigten Ausführungsbeispiel der erfindungsgemäßen Batterie einfach als Verbindungsöffnung 8 mit großer Querschnittsfläche ausgestaltet ist.

Der Elektrolytraum 3 ist vollständig mit Elektrolyten gemäß den normalen Betriebsbedingungen bis zu einer maximalen Füllhöhe, die durch eine am Elektrolytraum 3 angeordnete Überlaufleitung 21 definiert ist, gefüllt. Die Überlaufleitung 21 dient dem Überlauf des Elektrolyten bei Rückförderung des Elektrolyten 4 nach dem Ablassen. Unterhalb des Elektrolytraums 3 ist ein Elektrolyt-Auffangbehälter 6 angeordnet und über eine Schnell-Ablaßeinrichtung 7 in Form einer Leitung 7 mit dem Elektrolytraum 3 verbunden. Die Schnell-Ablaßleitung 7 weist ein Ventil 9a auf, welches stromlos offen, d.h. im Betriebszustand geschlossen, ist und mittels einer Steuereinrichtung 20 über eine Steuerleitung 23 gesteuert wird.

Die Figur zeigt die Batterie 1 im normalen Betriebszustand, wobei der Elektrolyt 4 sich vollständig im Reaktionsraum 3a und Reservoirraum 3b des Elektrolytraums 3 befindet und die Elektroden 2a, 2b völlig benetzt und in galvanischem Kontakt miteinander hält, so daß über die dann stattfindenden elektrochemischen Prozesse elektrische Energie erzeugt wird und über die Leitungen 5a, 5b nach außen hin abgegriffen werden kann.

Wenn, durch eine Gefahrensituation aktiviert, die Steuereinrichtung 20 das Ventil 9a geöffnet hat, fließt, durch die Schwerkraft angetrieben, der Elektrolyt 4 aus dem Reservoirraum 3b und Reaktionsraum 3a des Elektrolytraums 3 bis zu einer minimalen Füllhöhe in den Elektrolyt-Auffangbehälter. Die minimale Füllhöhe ergibt sich durch die Anordnung der Schnell-Ablaßeinrichtung 7 in Form der Leitung 7 am Elektrolytraum 3.

Diese minimale Füllhöhe ist so gewählt, daß bei abgelassenem Elektrolyten 4 die Elektroden 2a, 2b vom Elektrolyten 4 unbenetzt sind und nicht mehr in galvanischem Kontakt miteinander stehen, so daß durch die Leitungen 5a und 5b nach außen hin keinerlei elektrische Energie mehr abgegriffen werden kann.

Die Konvektion des Elektrolyten zwischen dem Reaktionsraum 3a und dem Reservoirraum 3b kann durch eine Umwälzeinrichtung 24, die ebenfalls durch die Steuereinrichtung 20 gesteuert betätigbar sein kann, unterstützt werden.

Ferner ist eine erste Fördereinrichtung 11a in der Leitung 7 vorgesehen, welche den schwerkraftgetriebenen Fluß des Elektrolyten 4 vom Elektrolytraum 3 in den Elektrolyt-Auffangbehälter 6 bei geöffnetem Ventil 9a unterstützt.

Zur Rückführung des Elektrolyten 4 aus dem Elektrolyt-Auffangbehälter 6 in den Elektrolytraum 3 hinein ist eine weitere Leitung 10 ausgebildet, die ihrerseits ein Ventil 9b und eine Pumpe oder andere Fördereinrichtung 11b aufweist.

Es ist auch denkbar, daß die Leitungen 7 und 10 bzw. die Ventile 9a, 9b und die Fördereinrichtung 11a, 11b allesamt in einer einzigen Leitung, die dem Ablassen und dem Rückführen des Elektrolyten 4 dient, ausgebildet sind.

Sowohl der Elektrolytraum 3 als auch der Elektrolyt-Auffangbehälter 6 können Einrichtungen zum Abfangen eines Überdrucks aufweisen. In der Figur sind diese Einrichtungen als Ventile 12 und 13 mit dahinter angeordneten Auffangbehältern 14a und 14b gezeigt.

Die Steuereinrichtung 20 ist über Steuerleitungen 23 zum Steuern sämtlicher Ventile 9a, 9b, 12, 13 und 22 und Fördereinrichtungen 11a und 11b ausgebildet. Ein Rückfluß des Elektrolyten kann durch die Ausbildung des Ventils 9a als Rückschlagventil verhindert werden.

## Patentansprüche

1. Batterie mit mindestens zwei Elektroden (2a, 2b) in einem Elektrolytraum (3), welcher im Betriebszustand der Batterie (1) mit einem flüssigen Elektrolyten (4) gefüllt ist, von dem die Elektroden (2a, 2b) zu einem wesentlichen Teil ihrer Oberfläche benetzt sind und über den die Elektroden (2a, 2b) in galvanischem Kontakt miteinander stehen, und mit einem elektrischen Abgriff der Elektroden (2a, 2b), und
mit mindestens einer gesteuert betätigbaren Schnell-Ablaßeinrichtung (7) zum raschen Ablassen des Elektrolyten (4) aus dem Elektrolytraum (3), wobei nach dem Ablassen des Elektrolyten (4) die Elektroden (2a, 2b) vom Elektrolyten (4) unbenetzt und somit voneinander galvanisch getrennt sind,
**dadurch gekennzeichnet,**
der Elektrolytraum (3) in einen Reaktionsraum (3a) und in einen Reservoirraum (3b) gegliedert ist,
daß der Reaktionsraum (3a) die Elektroden (2a, 2b) aufweist,
daß der Reaktionsraum (3a) relativ zum Reservoirraum (3b) wesentlich kleiner ausgebildet ist,
daß der Reservoirraum (3b) unmittelbar unterhalb des Reaktionsraums (3a) angeordnet ist und
daß zwischen dem Reaktionsraum (3a) und dem Reservoirraum (3b) zur direkten Kommunikation dieser beiden Räume eine Verbindungsöffnung (8) mit großer Querschnittsfläche vorgesehen ist.

2. Batterie nach Anspruch 1,
**dadurch gekennzeichnet,**
**daß** mindestens ein Elektrolyt-Auffangbehälter (6) zur Aufnahme mindestens eines Teils des Elektrolyten (4) aus dem Elektrolytraum (3) vorgesehen ist.

3. Batterie nach einem der vorhergehenden Ansprüche,
**dadurch gekennzeichnet,**
**daß** der Reservoirraum (3b) großvolumig ausgebildet ist.

4. Batterie nach einem der vorhergehenden Ansprüche,
**dadurch gekennzeichnet,**
**daß** eine Austauschleitung (8) zum konvektiven Elektrolytaustausch zwischen dem Reaktionsraum (3a) und dem Reservoirraum (3b) vorgesehen ist.

5. Batterie nach Anspruch 4,
**dadurch gekennzeichnet,**
**daß** eine Pump-, Rühr-, Umwälz- oder Heizeinrichtung (24) zum Erzeugen des konvektiven Austauschs des Elektrolyten (4) vorgesehen ist.

6. Batterie nach einem der vorhergehenden Ansprüche,
**dadurch gekennzeichnet,**
**daß** der Elektrolyt-Auffangbehälter (6) im wesentlichen unterhalb des Elektrolytraums (3) ausgebildet ist.

7. Batterie nach einem der vorhergehenden Ansprüche,
**dadurch gekennzeichnet,**
**daß** die Schnell-Ablaßeinrichtung (7) mindestens eine, elektrisch steuerbare Verschlußeinrichtung (9a) aufweist, welche zum Unterbinden eines Elektrolytflusses zwischen dem Elektrolytraum (3) und dem Elektrolyt-Auffangbehälter (6) in zumindest einer Richtung ausgebildet ist.

8. Batterie nach Anspruch 7,
**dadurch gekennzeichnet,**
**daß** die Verschlußeinrichtung (9a) als stromlos offenes Ventil, als Sprengbolzen, als Sollbruchstelle oder dergleichen ausgebildet ist.

9. Batterie nach einem der vorhergehenden Ansprüche,
**dadurch gekennzeichnet,**
**daß** eine Leitung (10) zum Fördern von Elektrolyten (4) zwischen dem Elektrolyt-Auffangbehälter (6) und dem Elektrolytraum (3) in zumindest einer Richtung ausgebildet ist.

10. Batterie nach einem der vorhergehenden Ansprüche,
**dadurch gekennzeichnet,**
**daß** mindestens eine gesteuert betätigbare Fördereinrichtung (11a, 11b) zum Fördern von Elektrolyten (4) zwischen dem Elektrolyt-Auffangbehälter (6) und dem Elektrolytraum (3) vorgesehen ist.

11. Batterie nach Anspruch 10,
**dadurch gekennzeichnet,**
**daß** die Fördereinrichtung (11a, 11b) als Pumpe oder als Einrichtung zum Verdrängen des Elektrolyten (4) aus dem Elektrolytraum (3), insbesondere als Gasdruckpatrone, ausgebildet ist.

12. Batterie nach einem der vorhergehenden Ansprüche,
**dadurch gekennzeichnet,**
**daß** als Schnell-Ablaßeinrichtung (7) eine Notablaßöffnung oder ein Steig- oder U-Rohr mit Verschlußteil vorgesehen ist.

13. Batterie nach einem der vorhergehenden Ansprüche,
**dadurch gekennzeichnet,**
**daß** eine Steuereinrichtung (20) zum Steuern der Fördereinrichtungen (11a, 11b, 18) und/oder der Ventileinrichtungen (9a, 9b, 19) über Steuerleitungen vorgesehen ist,
**daß** die Steuereinrichtung (20) zum Erkennen eines Signals einer Gefahrensituation und/oder einer Benutzeraktivierung ausgebildet ist, und daß bei erkanntem Signal das Ablassen des Elektrolyten (4) oder das Deaktivieren des Elektrolyten (4) auslösbar ist.

14. Batterie nach Anspruch 13
**dadurch gekennzeichnet,**
**daß** die Steuereinrichtung (20) mindestens eine als Beschleunigungssensor oder als manuell betätigbarer Notabschalter ausgelegte Sensoreinrichtung aufweist.

## Claims

1. Battery with at least two electrodes (2a, 2b) in an electrolyte compartment (3), which in the operating state of the battery (1) is filled with a liquid electrolyte (4), which wets a considerable proportion of the surface of the electrodes (2a, 2b) and by means of which the electrodes (2a, 2b) are in direct galvanic contact with one another, and with an electric tap of the electrodes (2a, 2b), and
with at least one controlled operable rapid draining device (7) for the rapid draining of the electrolyte (4) from the electrolyte compartment (3) wherein, following the draining of the electrolyte (4), the electrodes (2a, 2b) are not wetted by the electrolyte (4) and are consequently galvanically isolated from one another,
**characterized in that**
the electrolyte compartment (3) is subdivided into a reaction compartment (3a) and a reservoir compartment (3b),
that the reaction compartment (3a) contains the electrodes (2a, 2b),
that the reaction compartment (3a) is considerably smaller than the reservoir compartment (3b),
that the reservoir compartment (3b) is positioned directly below the reaction compartment (3a) and
that between the reaction compartment (3a) and the reservoir compartment (3b), a large cross-sectional surface connecting opening (8) is provided for the direct communication between the two compartments.

2. Battery according to claim 1
**characterized in that**
there is at least one electrolyte collecting tank (6) for receiving at least one part of the electrolyte (4) from the electrolyte compartment (3).

3. Battery according to one of the preceding claims,
**characterized in that**
the reservoir compartment (3b) has a large volume.

4. Battery according to one of the preceding claims,
**characterized in that**
there is an exchange line (8) for a convective electrolyte exchange between the reaction compartment (3a) and the reservoir compartment (3b).

5. Battery according to claim 4,
**characterized in that**
there is a pumping, stirring, circulating or heating device (24) for producing the convective exchange of the electrolyte (4).

6. Battery according to one of the preceding claims,
**characterized in that**
the electrolyte collecting tank (6) is substantially constructed below the electrolyte compartment (3).

7. Battery according to one of the preceding claims,
**characterized in that**
the rapid draining device (7) has at least one electrically controllable closing device (9a), which is constructed for preventing an electrolyte flow between the electrolyte compartment (3) and the electrolyte collecting tank (6) in at least one direction.

8. Battery according to claim 7,
**characterized in that**
the closing device (9a) is constructed as a valve open in the currentless state, as an explosive bolt, as a predetermined breaking point or the like.

9. Battery according to one of the preceding claims,
**characterized in that**
there is a line (10) for delivering the electrolyte (4) between the electrolyte collecting tank (6) and the electrolyte compartment (3) in at least one direction.

10. Battery according to one of the preceding claims,
**characterized in that**
there is at least one controlled operable delivery device (11a, 11b) for delivering the electrolyte (4) between the electrolyte collecting tank (6) and the electrolyte compartment (3).

11. Battery according to claim 10,
**characterized in that**
the delivery device (11a, 11b) is constructed as a pump or as a device for the expulsion of the electrolyte (4) from the electrolyte compartment (3), particularly as a gas pressure cartridge.

12. Battery according to one of the preceding claims,
**characterized in that**
as rapid draining device (7) is provided an emergency drain opening or a riser or U-tube with closure part.

13. Battery according to one of the preceding claims,
**characterized in that**
there is a control device (20) for controlling the delivery devices (11a, 11b, 18) and/or the valve means (9a, 9b, 19) by means of control lines,
that the control device (20) is constructed for detecting a signal of a danger situation and/or a user activation, and that when the signal is detected, the draining of the electrolyte (4) or the deactivation of the electrolyte (4) can be initiated.

14. Battery according to claim 13,
**characterized in that**
the control device (20) has at least one sensor means designed as an acceleration sensor or as a manually operable emergency cutout.

## Revendications

1. Batterie avec au moins deux électrodes (2a, 2b) dans une chambre (3) à électrolyte qui, dans l'état de fonctionnement de la batterie (1), est remplie d'un électrolyte liquide (4) avec lequel les électrodes (2a, 2b) sont mouillées sur une part substantielle de leur surface et par l'intermédiaire duquel les électrodes (2a, 2b) se trouvent mutuellement en contact galvanique, et avec une prise électrique des électrodes (2a, 2b), et
avec au moins un dispositif de décharge rapide (7) actionnable de manière contrôlée pour évacuer rapidement l'électrolyte (4) hors de la chambre (3) à électrolyte, les électrodes (2a, 2b) se trouvant non mouillées par l'électrolyte et donc séparées galvaniquement après la décharge de l'électrolyte (4),
***caractérisée***
***en ce que*** la chambre (3) à électrolyte est divisée en un compartiment de réaction (3a) et un compartiment réservoir (3b),
***en ce que*** le compartiment réservoir (3b) présente les électrodes (2a, 2b),
***en ce que*** le compartiment de réaction (3a) est formé plus petit que le compartiment réservoir (3b)
***en ce que*** le compartiment réservoir (3b) est positionné directement au-dessous du compartiment de réaction (3a), et
***en ce qu***'entre le compartiment de réaction (3a) et le compartiment réservoir (3b), il est prévu une ouverture de communication (8) de grande aire de section afin de mettre ces deux compartiments en communication directe.

2. Batterie selon la Revendication 1, ***caractérisée en ce qu***'au moins un récipient (6) de collecte d'électrolyte est prévu pour recevoir au moins une partie de l'électrolyte (4) provenant de la chambre (3) à électrolyte.

3. Batterie selon l'une quelconque des Revendications précédentes, ***caractérisée en ce que*** le compartiment réservoir (3b) est formé avec un grand volume.

4. Batterie selon l'une quelconque des Revendications précédentes, ***caractérisée en ce qu***'une conduite d'échange (8) est prévue en vue d'un échange convectif d'électrolyte entre le compartiment de réaction (3a) et le compartiment réservoir (3b).

5. Batterie selon la Revendication 4, ***caractérisée en ce qu***'un dispositif de pompage, agitation, circulation ou chauffage (24) est prévu pour établir l'échange convectif de l'électrolyte (4).

6. Batterie selon l'une quelconque des Revendications précédentes, ***caractérisée en ce que*** le récipient (6) de collecte d'électrolyte est formé pour l'essentiel au-dessous de la chambre (3) à électrolyte.

7. Batterie selon l'une quelconque des Revendications précédentes, ***caractérisée en ce que*** le dispositif de décharge rapide (7) présente au moins un dispositif de fermeture (9a) à commande électrique, qui est formé afin d'empêcher un écoulement d'électrolyte entre la chambre (3) à électrolyte et le récipient (6) de collecte d'électrolyte dans au moins une direction.

8. Batterie selon la Revendication 7, ***caractérisée en ce que*** le dispositif de fermeture (9a) est conformé en vanne ouverte hors courant, en boulon explosif, en point destiné à la rupture ou analogue.

9. Batterie selon l'une quelconque des Revendications précédentes, ***caractérisée en ce qu***'une conduite (10) est formée pour refouler l'électrolyte (4) entre le récipient (6) de collecte d'électrolyte et la chambre (3) à électrolyte dans au moins une direction.

10. Batterie selon l'une quelconque des Revendications précédentes, ***caractérisée en ce qu***'au moins un dispositif de refoulement (11a, 11b) à commande électrique est prévu pour refouler l'électrolyte (4) entre le récipient (6) de collecte d'électrolyte et la chambre (3) à électrolyte.

11. Batterie selon la Revendication 10, ***caractérisée en ce que*** le dispositif de refoulement (11a, 11b) est conformé en pompe ou en dispositif de déplacement de l'électrolyte (4) hors de la chambre (3) à électrolyte, en particulier en cartouche de gaz sous pression.

12. Batterie selon l'une quelconque des Revendications précédentes, ***caractérisée en ce qu***'il est prévu, comme dispositif de décharge rapide (7), une ouverture de décharge d'urgence ou un tuyau ascendant ou en U avec une pièce de fermeture.

13. Batterie selon l'une quelconque des Revendications précédentes, ***caractérisée en ce qu***'un dispositif de commande (20) servant à commander les dispositifs de refoulement (11a, 11b, 8) et/ou les dispositifs de vanne (9a, 9b, 19) par l'intermédiaire de conduites de commande est prévu,
***en ce que*** le dispositif de commande (20) est conformé pour reconnaître un signal d'une situation dangereuse et/ou d'une activation par un usager, et
***en ce qu***'en cas de reconnaissance du signal, la décharge de l'électrolyte (4) ou la désactivation de l'électrolyte (4) peut être activée.

14. Batterie selon la Revendication 13, ***caractérisée en ce que*** le dispositif de commande (20) présente au moins un dispositif capteur conformé en capteur d'accélération ou en arrêt d'urgence à commande manuelle.
